# EUROPEAN PATENT APPLICATION

(11) **EP 3 125 115 A1**
(43) Date of publication of application: **01.02.2017**
(21) Application number: 14892795.7
(22) Date of filing: 03.12.2014
(51) Int. Cl.: G06F 9/50

(54) **VM RESOURCE SCHEDULING METHOD, APPARATUS, AND SYSTEM**

(30) Priority: 20.05.2014 CN 201410213726
(71) Applicant: Huawei Technologies Co. Ltd., Shenzhen, Guangdong 518129 (CN)
(72) Inventor: ZOU, Tao, Shenzhen Guangdong 518129 (CN)
(74) Representative: Goddar, Heinz J.
(86) International application number: PCT/CN2014/092944
(87) International publication number: WO 2015/176522

(57) **Abstract**

The present invention discloses a method for scheduling a VM resource, an apparatus, and a system, where the method for scheduling a VM resource includes: when a service device determines that a VM scaling operation needs to be performed on a quantity of VMs used for serving an application, obtaining, by the service device, an application type of the application; determining, by the service device according to a correspondence between a minimum constituent unit of the application and the application type, a quantity of VMs for the VM scaling operation; and performing the VM scaling operation according to the determined quantity of VMs. Therefore, the present invention improves appropriateness of a VM scaling operation.

## Description

This application claims priority to Chinese Patent Application No. 201410213726.3, filed on May 20, 2014, and entitled "METHOD FOR SCHEDULING VM RESOURCE, APPARATUS, AND SYSTEM", which is incorporated herein by reference in its entirety.

### TECHNICAL FIELD

The present invention relates to the field of electronic technologies, and in particular, to a method for scheduling a VM resource, an apparatus, and a system.

### BACKGROUND

Cloud computing, as the most profound revolution of the IT industry since the Internet revolution, truly achieves service transparency. VM (Virtual Machine, virtual machine) resource dynamic scheduling refers to performing VM scaling according to usage of a virtual machine resource to adapt to a requirement of an application on the VM resource.

There are two manners for a VM scaling operation. One type of VM scaling operation is to modify a specification of a virtual machine. For example, to modify a quantity of CPU cores, a memory size, or the like. The other type of VM scaling operation is to adjust a quantity of virtual machines, and is specifically to increase or decrease a quantity of virtual machines serving an application. In the prior art, a virtualization management system obtains virtual machine usage information of an application, and matches the information with a preset scaling rule. A scaling operation is performed as long as the information matches the preset scaling rule. Therefore, a VM scaling operation can satisfy the requirement of the application on the VM resource. The scaling operation includes VM scaling-out (for example, increasing a quantity of VMs) or VM scaling-in (for example, decreasing a quantity of VMs). However, an existing VM scaling operation for adjusting a quantity of virtual machines is considered only from a resource requirement perspective. When scaling needs to be performed, a same manner of a VM scaling operation is used to deal with all scaling situations without considering an application. For example, there is an application A. In an original situation, two sets of double machines serve the application A by using an LB, where one set of double machine includes one host VM and one backup VM. A double machine 1 includes a host VM1 and a backup VM2. A double machine 2 includes a host VM3 and a backup VM4. When the host VM1 or the host VM3 becomes abnormal, a service of the application A is taken over by the VM2 or the VM4 correspondingly. When the service of the application A is busy, VM scaling-out needs to be performed. The virtualization management system performs processing in a same manner of a VM scaling operation (where the same processing manner is to add one VM, which is described as a VM5).

It can be learned that, for the virtualization management system, an application on a virtual machine is not considered. Therefore, reliability of the application is reduced when the virtualization management system performs a scaling operation. For example, when a type of the application is double machine, only a VM5 is created for serving the application. Because the VM5 does not have a corresponding backup virtual machine, when the VM5 becomes abnormal, a service on the VM5 cannot be taken over. Therefore, a VM scaling operation implemented in the foregoing manner causes a decrease in the reliability of the application, leading to an inappropriate VM scaling operation.

### SUMMARY

Embodiments of the present invention provide a method for scheduling a VM resource, an apparatus, and a system, so as to improve appropriateness in a process of a VM scaling-out or scaling-in operation.

According to a first aspect, an embodiment of the present invention provides a method for scheduling a VM resource, including:
when a service device determines that a VM scaling operation needs to be performed on a quantity of VMs used for serving an application, obtaining, by the service device, an application type of the application, where the VM scaling operation includes performing scaling-out or scaling-in on the VMs serving the application;
determining, by the service device according to a correspondence between a minimum constituent unit of the application and the application type, a quantity of VMs for the VM scaling operation, where the minimum constituent unit is a minimum quantity of VMs required for serving the application; and
performing, by the service device, the VM scaling operation according to the determined quantity of VMs.

With reference to the first aspect, in a first possible implementation manner, when the VM scaling operation is specifically performing scaling-out on the VMs serving the application, the performing, by the service device, the VM scaling operation according to the determined quantity of VMs specifically includes:
controlling, by the service device, a virtualization management device to create VMs according to the determined quantity of VMs and start at least one VM in the created VMs; and
after the virtualization management device completes the creation operation and the start operation, registering, by the service device, the at least one started VM with a load balancer LB.

With reference to the first aspect, in a second possible implementation manner, when the VM scaling operation is specifically performing scaling-in on the VMs serving the application, the performing, by the service device, the VM scaling operation according to the determined quantity of VMs specifically includes:
determining, by the service device according to the determined quantity of VMs and from the VMs serving the application, a VM that needs to be deleted;
deregistering, by the service device, a registered VM with an LB, where the registered VM is in the VM that needs to be deleted; and
after succeeding in deregistration, controlling, by the service device, the virtualization management system to delete the VM that needs to be deleted.

With reference to the first aspect or the second possible implementation manner of the first aspect, in a third possible implementation manner, the determining, according to the determined quantity of VMs and from the VMs serving the application, a VM that needs to be deleted specifically includes:
when the determined quantity of VMs is 1, selecting, by the service device, one VM directly from the VM registered on the LB as a VM that needs to be deleted; or
when the determined quantity of VMs is greater than 1, selecting, by the service device, one VM from the VM registered on the LB, finding, according to configuration information of the selected VM, a VM associated with the selected VM, and using, by the service device, both the selected VM and the VM associated with the VM as VMs that need to be deleted.

According to a second aspect, the present invention provides an apparatus, including:
a first obtaining unit, configured to: when it is determined that a VM scaling operation needs to be performed on a quantity of VMs used for serving an application, obtain an application type of the application, where the VM scaling operation includes performing scaling-out or scaling-in on VMs serving the application;
a determining unit, configured to determine, according to a correspondence between a minimum constituent unit of the application and the application type that is obtained by the first obtaining unit, a quantity of VMs for the VM scaling operation, where the minimum constituent unit is a minimum quantity of VMs required for serving the application; and
an execution unit, configured to perform the VM scaling operation according to the quantity of VMs that is determined by the determining unit.

With reference to the second aspect, in a first possible implementation manner, the apparatus further includes:
a second obtaining unit, configured to obtain a using status of a VM serving the application; and
a judging unit, configured to determine whether the using status of the VM satisfies a VM scaling rule, where if the using status of the VM satisfies the VM scaling rule, it indicates that the service device needs to perform the VM scaling operation, and the VM scaling rule is preconfigured in the service device.

With reference to the second aspect or the first possible implementation manner of the second aspect, in a second possible implementation manner, when the VM scaling operation is specifically performing scaling-out on the VMs serving the application, the execution unit is specifically configured to:
control a virtualization management device to create VMs according to the determined quantity of VMs and start at least one VM in the created VMs; and
after the virtualization management device completes the creation operation and the start operation, register the at least one started VM with a load balancer LB.

With reference to the second aspect or the first possible implementation manner of the second aspect, in a third possible implementation manner, when the VM scaling operation is specifically performing scaling-in on the VMs serving the application, the execution unit is specifically configured to:
determine, according to the determined quantity of VMs and from the VMs serving the application, a VM that needs to be deleted;
deregister a registered VM with an LB, where the registered VM is in the VM that needs to be deleted; and
after succeeding in deregistration, control the virtualization management system to delete the VM that needs to be deleted.

With reference to the third possible implementation manner of the second aspect, in a fourth possible implementation manner, that the execution unit determines, according to the determined quantity of VMs and from the VMs serving the application, a VM that needs to be deleted specifically includes: when the determined quantity of VMs is 1, the execution unit selects one VM directly from the VM registered on the LB as a VM that needs to be deleted; or when the determined quantity of VMs is greater than 1, the execution unit selects one VM from the VM registered on the LB, finds, according to configuration information of the selected VM, a VM associated with the selected VM, and uses both the selected VM and the VM associated with the VM as VMs that need to be deleted.

In the embodiments of the present invention, when a service device determines that a VM scaling operation needs to be performed on a quantity of VMs used for serving an application, the service device obtains an application type of the application, where the VM scaling operation includes performing scaling-out or scaling-in on the VMs serving the application; the service device determines, according to a correspondence between a minimum constituent unit of the application and the application type, a quantity of VMs for the VM scaling operation, where the minimum constituent unit is a minimum quantity of VMs required for serving the application; and the service device performs the VM scaling operation according to the determined quantity of VMs. Therefore, during VM scaling operation, an application type is additionally considered, so that a quantity of VMs to be scaled-out or scaled-in is more appropriate during the VM scaling operation.

### BRIEF DESCRIPTION OF DRAWINGS

FIG. 1 is an architecture diagram of a migration comprehensive determining system according to an embodiment of the present invention;
FIG. 2 is a flowchart of implementing, on a service device side, a method for scheduling a VM resource according to an embodiment of the present invention;
FIG. 3A and FIG. 3B are an overall frame diagram of a method for scheduling a VM resource according to an embodiment of the present invention;
FIG. 4 is a functional block diagram of an apparatus according to an embodiment of the present invention; and
FIG. 5 is a functional block diagram of a service device according to an embodiment of the present invention.

### DESCRIPTION OF EMBODIMENTS

To resolve a problem in the prior art that a VM scaling operation causes a decrease in reliability of an application, the embodiments of the present invention propose a method for scheduling a VM resource, an apparatus, and a system.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

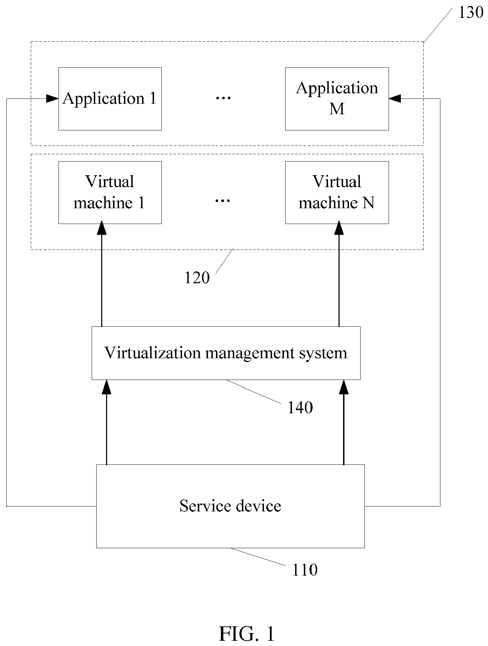

As shown in FIG. 1, FIG. 1 is an architecture diagram of a comprehensive migration determining system according to an embodiment of the present invention. The system is configured to implement a method for scheduling a virtual machine VM resource according to an embodiment of the present invention. The system includes: a service device 110, multiple VMs 120 and multiple applications 130 that are managed by the service device 110, and a virtualization management system 140 that creates, starts, or deletes a VM under the control of the service device 110. The virtualization management system 140 may be disposed in the service device 110, or may be an independent device.

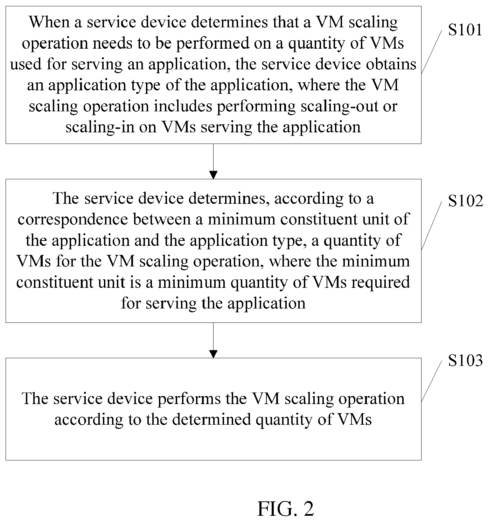

Referring to FIG. 2, an embodiment of the present invention provides a method for scheduling a virtual machine VM resource. The method is applied to the service device 110 of the comprehensive migration system shown in FIG. 1. FIG. 2 is a flowchart of the method for scheduling a VM resource according to this embodiment of the present invention. The following describes, with reference to FIG. 1 and FIG. 2, the method for scheduling a VM resource according to this embodiment of the present invention.

S101: When a service device determines that a VM scaling operation needs to be performed on a quantity of VMs used for serving an application, the service device obtains an application type of the application, where the VM scaling operation includes performing scaling-out or scaling-in on the VMs serving the application.

In a specific implementation process, application information of the application is collected by using an agent deployed on the application. The collected application information includes an application name of the application, an application type of the application, a node identifier of the application, an associated application of the application, a VM that belongs to the application, and the like. The application type includes a single-machine type, a double-machine type, a cluster type, and the like. A node identifier for the double-machine type is "Host or Backup", and a node identifier for the cluster type is an "incremental NodeID".

The agent deployed on the application is configured to collect the application information of the application, the service device searches for the application type of the application by using an identifier of the application (such as a number and a name of the application) to determine whether the application type of the application is a single-machine type, a double-machine type, or a cluster type.

S102: The service device determines, according to a correspondence between a minimum constituent unit of the application and the application type, a quantity of VMs for the VM scaling operation, where the minimum constituent unit is a minimum quantity of VMs required for serving the application.

Specifically, the correspondence between a minimum constituent unit of the application and the application type may be as follows: when the application type is a single-machine type and the minimum constituent unit of the application is 1, it indicates that the VM scaling operation is performed according to a single VM; when the application type is a double-machine type and the minimum constituent unit of the application is 2, it indicates that the VM scaling operation is performed on at least two VMs, and that a host-backup relationship exists between the two VMs on which the VM scaling operation is performed; and when the application type is a cluster type and the minimum constituent unit of the application is 1, it indicates that the VM scaling operation is performed on a single VM, and a host-backup relationship does not exist between newly added VMs. The foregoing correspondence between a minimum constituent unit of the application and the application type is merely an example, and the minimum constituent unit of the application may also be set in specific implementation according to the application type.

After obtaining the application type of the application, the service device can determine, according to the correspondence between the application type and a minimum constituent unit of the application, the quantity of VMs for the VM scaling operation. Therefore, the quantity of VMs may be 1, 2, or another quantity, and there is not always a same quantity of VMs or VMs of a same type.

Specifically, to allow that a VM resource can adapt to a requirement of an application, the VM scaling operation may be performing scaling-out on the VMs serving the application to lower, by increasing a quantity of VMs serving the application, pressure brought to the VMs when a service is busy; or the VM scaling operation may be performing scaling-in on the VMs serving the application to lower, by decreasing a quantity of VMs serving the application, power consumption in a premise of satisfying the requirement of the application on a VM resource.

S103: The service device performs the VM scaling operation according to the determined quantity of VMs.

Optionally, when the VM scaling operation is specifically performing scaling-out on the VMs serving the application, S103 includes the following procedures:

Step 1: The service device controls a virtualization management system to create a VM according to the quantity of VMs that is determined in S102 and start at least one VM in the created VM.

A specific processing manner in Step 1 is different according to a different application type of the application, and the following provides description separately:

If the application type of the application is a double-machine type, the service device creates one group of VMs having a host-backup relationship. Specifically, one group of VMs having a host-backup relationship includes one host VM and one backup VM; and then the service device starts the host VM in the group of created VMs.

If the application type of the application is a single-machine type or a cluster type, the service device creates one VM, and then the service device starts the created VM.

Step 2: After the virtualization management device completes the creation operation and the start operation, the service device registers at least one VM that has been started with a load balancer LB.

Specifically, in Step 2, if the virtualization management system creates one group of VMs having a host-backup relationship, the host VM that has been started is registered with the LB; and if the virtualization management system creates one or more VMs that do not have a host-backup relationship, all VMs that are created for performing scaling-out on the VMs serving the application are registered with the LB at this time.

It can be seen from the foregoing description in which S103 is specifically performing VM scaling-in. During VM scaling-in, an application type is additionally considered, and scaling-in is performed, by using an application as a unit, on the VMs serving the application, thereby ensuring that VMs can reliably serve the application after the scaling-in is performed, and improving appropriateness of a scaling operation.

Optionally, when the VM scaling operation is specifically performing scaling-in on the VMs serving the application, S103 includes the following procedures: the service device determines, according to the determined quantity of VMs and from the VMs serving the application, a VM that needs to deleted; the service device deregisters a registered VM in the VM that needs to deleted with the LB; and after succeeding in deregistration, the service device controls the virtualization management system to delete the VM that needs to be deleted.

The determining, according to the determined quantity of VMs and from the VMs serving the application, a VM that needs to be deleted specifically includes: when the determined quantity of VMs is 1, selecting, by the service device, one VM directly from the VM registered on the LB as a VM that needs to be deleted; or when the determined quantity of VMs is greater than 1, selecting, by the service device, one VM from the VM registered on the LB, and finding, according to configuration information of the selected VM, a VM associated with the selected VM; and using, by the service device, both the selected VM and the VM associated with the selected VM as VMs that need to be deleted.

To avoid that an object served by the application continues to require a scaled-in VM to provide a service, a registered VM in the obtained VM needs to be deregistered with the LB. Specifically, if the application type of the application is a double-machine type, the service device obtains any group of VMs having a host-backup relationship in multiple groups of VMs serving the application, and deregisters a registered VM (the registered VM may be a host VM, or may be a backup VM) in the group of obtained VMs having a host-backup relationship with the LB. If the application type of the application is cluster or single-machine, the service device obtains any VM in the VMs serving the application, and deregisters the obtained VM with the LB.

It can be seen from the foregoing description in which S103 is specifically performing scaling-in on the VMs serving the application, an application type is additionally considered, and after scaling-in is performed by using an application as a unit to ensure a decrease in the VMs, a remaining VM can still reliably serve the application, thereby improving appropriateness of a scaling operation.

Further, to determine whether a VM scaling operation needs to be performed for the application to adapt to the requirement of the application on a VM resource, this embodiment of the present invention further provides the following procedures:

The service device obtains a using status of a VM serving the application, and then the service device determines whether the using status of the VM satisfies a VM scaling rule, and if the using status of the VM satisfies the VM scaling rule, it indicates that the service device needs to perform the VM scaling operation.

Specifically, after the service device is started, the service device obtains information about a VM resource, and then obtains, from the VM resource, the using status of the VM serving the application, for example, if the service device obtains a VM 1 and a VM 2 serving an application A, the service device obtains using statuses of the VM 1 and the VM 2 of the application A from the VM 1 and the VM 2. Specifically, the using status of the VM may be specifically CPU usage of the application, or may be a current maximum quantity of connections of the application.

Specifically, the VM scaling rule is preconfigured in the service device, for example, the configured VM scaling rule may be: when the CPU usage is greater than or equal to 80%, scaling-in is performed on the VMs serving the application; when the CPU usage is less than or equal to 20%, scaling-in is performed on the VMs serving the application. For another example, the configured VM scaling rule may be: when the current maximum quantity of connections is greater than or equal to 500, scaling-in is performed on the VMs serving the application; when the current maximum quantity of connections is less than or equal to 255, scaling-in is performed on the VMs serving the application. Certainly, a value in the VM scaling rule is not limited in this embodiment of the present invention, and is set in a specific implementation process according to an actual VM resource scheduling requirement.

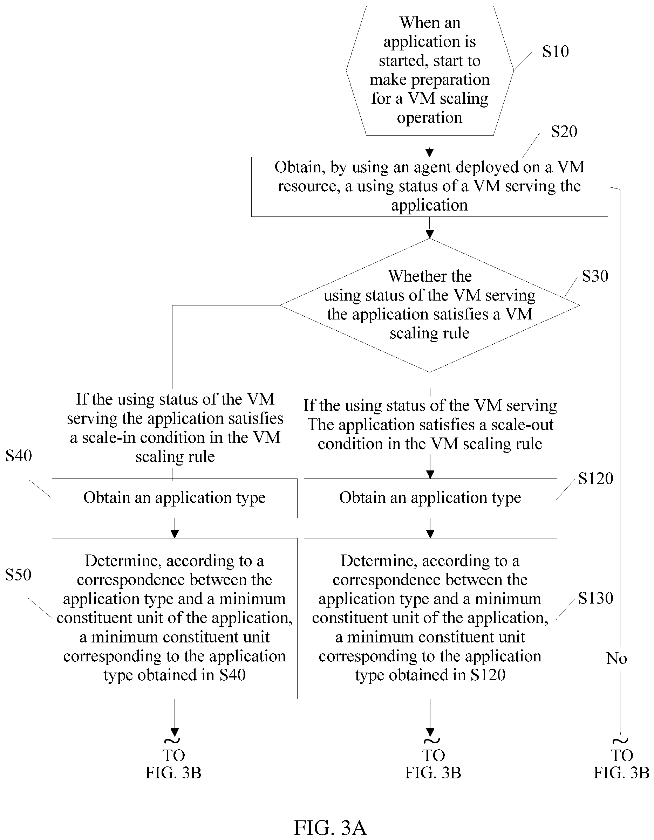

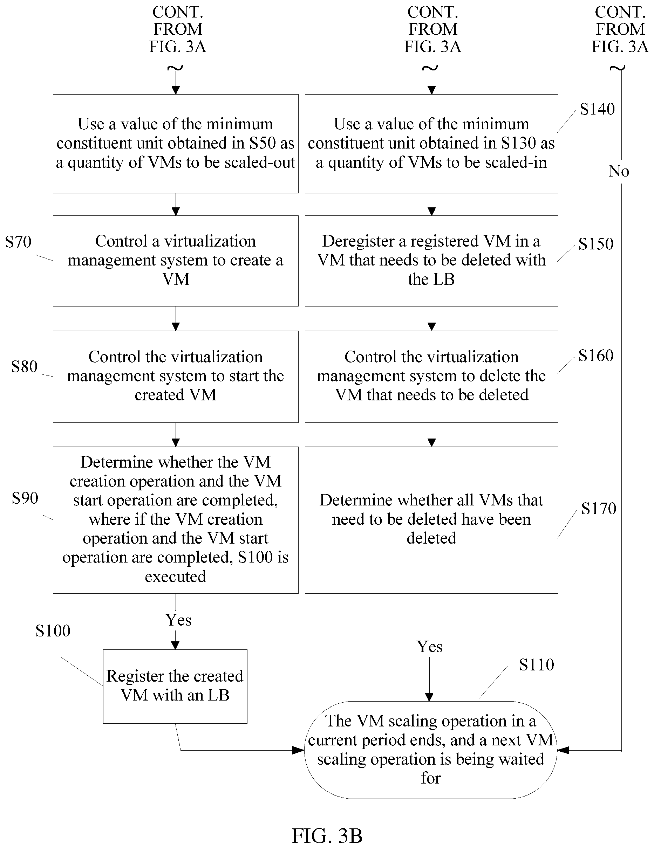

Further, whether the using status of the VM satisfies the VM scaling rule is determined. There are specifically three results of the determining: a first one is that the using status of the VM satisfies a scale-in condition in the VM scaling rule; a second result is that the using status of the VMs satisfies a scale-out condition in the VM scaling rule; and a third result is that the using status of the VM does not satisfy the VM scaling rule. The following describes, with respect to the possible three results of the determining and referring to FIG. 3A and FIG. 3B, a complete procedure of implementing VM resource scheduling by a service device in an embodiment of the present invention.

S10: An application is started, and the service device starts to make preparation for a VM scaling operation.

S20: The service device obtains information about a VM resource, and obtains, by using an agent deployed on the VM resource, a using status of a VM serving the application.

S30: The service device determines whether the using status of the VM satisfies a VM scaling rule, where if the using status of the VM satisfies a scale-in condition in the VM scaling rule, S40 is proceeded to, and S40 to S100 are executed successively; if the using status of the VM satisfies a scale-out condition in the VM scaling rule, S120 is proceeded to, and S120 to S170 are executed successively; and if the using status of the VM does not satisfy the VM scaling rule, no VM scaling operation is performed in a current period, and S110 is proceeded to.

S40: The service device obtains an application type.

S50: The service device determines, according to a correspondence between the application type and a minimum constituent unit of the application, a minimum constituent unit corresponding to the application type obtained in S40.

S60: The service device uses a value of the minimum constituent unit obtained in S50 as a quantity of VMs to be scaled-out.

S70: The service device communicates with a virtualization management system, so as to control the virtualization management system to create a VM.

S80: The service device communicates with the virtualization management system, so as to control the virtualization management system to start the created VM.

S90: The service device determines whether the VM creation operation and the VM start operation are completed, where if the VM creation operation and the VM start operation are completed, S100 is executed.

S100: The service device registers the created VM with an LB. Specifically, different registration processing is performed according to the application type, and reference is made to the foregoing embodiment.

S110: The VM scaling operation in the current period ends, where a next VM scaling operation is being waited for.

S120: The service device obtains an application type.

S130: The service device determines, according to a correspondence between the application type and a minimum constituent unit of the application, a minimum constituent unit corresponding to the application type obtained in S120.

S140: The service device uses a value of the minimum constituent unit obtained in S130 as a quantity of VMs to be scaled-in, and determines, according to the quantity of VMs, a VM that needs to be deleted.

S150: The service device deregisters a registered VM with an LB, where the registered VM is in the VM that needs to be deleted. Specifically, different deregistration processing is performed according to the application type, and for details, reference is made to the foregoing embodiment.

S160: The service device communicates with the virtualization management system, so as to control the virtualization management system to delete the VM that needs to be deleted.

S170: The service device determines whether all VMs that need to be deleted have been deleted, where if all the VMs that need to be deleted have been deleted, proceed to S110.

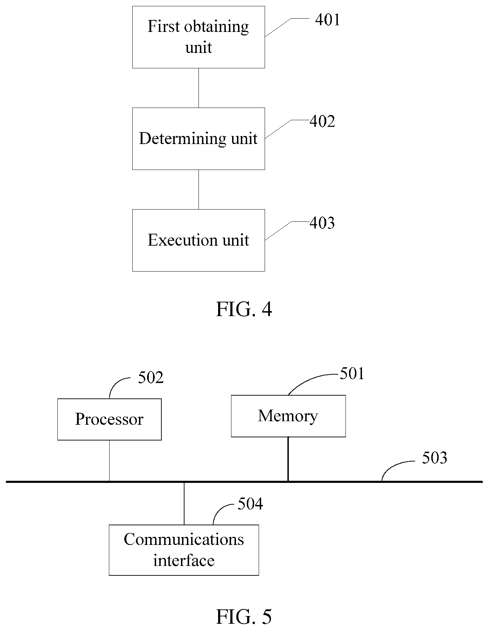

Based on a same invention concept, an embodiment of the present invention provides an apparatus. Referring to FIG. 4, the apparatus includes:
a first obtaining unit 401, configured to: when it is determined that a VM scaling operation needs to be performed on a quantity of VMs used for serving an application, obtain an application type of the application, where the VM scaling operation includes performing scaling-out or scaling-in on VMs serving the application;
a determining unit 402, configured to determine, according to a correspondence between a minimum constituent unit of the application and the application type that is obtained by the first obtaining unit 401, a quantity of VMs for the VM scaling operation, where the minimum constituent unit is a minimum quantity of VMs required for serving the application; and
an execution unit 403, configured to perform the VM scaling operation according to the quantity of VMs that is determined by the determining unit 402.

Optionally, the apparatus further includes:
a second obtaining unit, configured to obtain a using status of a VM serving the application; and
a judging unit, configured to determine whether the using status of the VM satisfies a VM scaling rule, where if the using status of the VM satisfies the VM scaling rule, it indicates that a service device needs to perform the VM scaling operation, and the VM scaling rule is preconfigured in the service device.

Optionally, when the VM scaling operation is specifically performing scaling-out on the VMs serving the application, the execution unit 403 is specifically configured to:
control a virtualization management device to create VMs according to the determined quantity of VMs and start at least one VM in the created VMs; and
after the virtualization management device completes the creation operation and the start operation, register the at least one started VM with a load balancer LB.

Optionally, when the VM scaling operation is specifically performing scaling-in on the VMs serving the application, the execution unit 403 is specifically configured to:
determine, according to the determined quantity of VMs and from the VMs serving the application, a VM that needs to be deleted;
deregister a registered VM with an LB, where the registered VM is in the VM that needs to be deleted; and
after succeeding in deregistration, control the virtualization management system to delete the VM that needs to be deleted.

The apparatus shown in FIG. 4 may be the service device in the method embodiment. For specific implementation of each function, reference may be made to parts in the method embodiment, and details are not described herein again.

An embodiment of the present invention further provides a schematic structural diagram of hardware of a service device. Referring to FIG. 5, the service device includes a memory 501, at least one processor 502, a communications bus 503, and at least one communications interface 504.

The communications bus 503 is configured to implement connections and communication between the foregoing components. The communications interface 504 is configured to connect to and communicate with an external device.

The memory 501 is configured to store program code.

The processor 502 is configured to obtain the program code from the memory 501, so as to perform the following processing: when determining that a VM scaling operation needs to be performed on a quantity of VMs used for serving an application, obtaining an application type of the application, where the VM scaling operation includes performing scaling-out or scaling-in on VMs serving the application; determining, according to a correspondence between a minimum constituent unit of the application and the application type, a quantity of VMs for the VM scaling operation, where the minimum constituent unit is a minimum quantity of VMs required for serving the application; and performing the VM scaling operation according to the determined quantity of VMs.

Optionally, the processor 502 is further configured to:
obtain a using status of a VM serving the application; and
determine whether the using status of the VM satisfies a VM scaling rule, where if the using status of the VM satisfies the VM scaling rule, it indicates that the service device needs to perform the VM scaling operation, and the VM scaling rule is preconfigured in the service device.

Optionally, when the VM scaling operation is specifically performing scaling-out on the VMs serving the application, that the processor 502 performs the VM scaling operation according to the determined quantity of VMs specifically includes:
the processor 502 controls a virtualization management device to create VMs according to the determined quantity of VMs and start at least one VM in the created VMs; and
after the virtualization management device completes the creation operation and the start operation, the processor 502 registers the at least one started VM with a load balancer LB.

Optionally, when the VM scaling operation is specifically performing scaling-in on the VMs serving the application, that the processor 502 performs the VM scaling operation according to the determined quantity of VMs specifically includes:
the processor 502 determines, according to the determined quantity of VMs and from the VMs serving the application, a VM that needs to be deleted;
deregisters a registered VM with an LB, where the registered VM is in the VM that needs to be deleted; and
after succeeding in deregistration, controls the virtualization management system to delete the VM that needs to be deleted.

That the processor 502 determines, according to the determined quantity of VMs and from the VMs serving the application, a VM that needs to be deleted specifically includes:
when the determined quantity of VMs is 1, the processor 502 selects one VM directly from the VM registered on the LB as a VM that needs to be deleted; or
when the determined quantity of VMs is greater than 1, the processor 502 selects one VM from the VM registered on the LB, and finds, according to configuration information of the selected VM, a VM associated with the selected VM; and the processor 502 uses both the selected VM and the VM associated with the selected VM as VMs that need to be deleted.

It may be clearly understood by a person skilled in the art that, for the purpose of convenient and brief description, for a detailed working process of the foregoing apparatus and serving device, reference may be made to a corresponding process in the foregoing method embodiments, and details are not described herein again.

In the several embodiments provided in the present application, it should be understood that the disclosed device, apparatus, and method may be implemented in other manners. For example, the apparatus embodiment described in FIG. 4 is merely exemplary. For example, the unit division may merely be logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiment shown in FIG. 4 may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A method for scheduling a virtual machine VM resource, comprising:
when a service device determines that a VM scaling operation needs to be performed on a quantity of VMs used for serving an application, obtaining, by the service device, an application type of the application, wherein the VM scaling operation comprises performing scaling-out or scaling-in on the VMs serving the application;
determining, by the service device according to a correspondence between a minimum constituent unit of the application and the application type, a quantity of VMs for the VM scaling operation, wherein the minimum constituent unit is a minimum quantity of VMs required for serving the application; and
performing, by the service device, the VM scaling operation according to the determined quantity of VMs.

2. The method according to claim 1, wherein before the service device determines that a VM scaling operation needs to be performed on a quantity of VMs used for serving an application, the method further comprises:
obtaining, by the service device, a using status of a VM serving the application; and
determining, by the service device, whether the using status of the VM satisfies a VM scaling rule, wherein if the using status of the VM satisfies the VM scaling rule, it indicates that the service device needs to perform the VM scaling operation, and the VM scaling rule is preconfigured in the service device.

3. The method according to claim 1 or 2, wherein when the VM scaling operation is specifically performing scaling-out on the VMs serving the application, the performing, by the service device, the VM scaling operation according to the determined quantity of VMs specifically comprises:
controlling, by the service device, a virtualization management device to create VMs according to the determined quantity of VMs and start at least one VM in the created VMs; and
after the virtualization management device completes the creation operation and the start operation, registering, by the service device, the at least one started VM with a load balancer LB.

4. The method according to claim 1 or 2, wherein when the VM scaling operation is specifically performing scaling-in on the VMs serving the application, the performing, by the service device, the VM scaling operation according to the determined quantity of VMs specifically comprises:
determining, by the service device according to the determined quantity of VMs and from the VMs serving the application, a VM that needs to be deleted;
deregistering, by the service device, a registered VM with an LB, wherein the registered VM is in the VM that needs to be deleted; and
after succeeding in deregistration, controlling, by the service device, the virtualization management system to delete the VM that needs to be deleted.

5. The method according to claim 4, wherein the determining, according to the determined quantity of VMs and from the VMs serving the application, a VM that needs to be deleted specifically comprises:
when the determined quantity of VMs is 1, selecting, by the service device, one VM directly from the VM registered on the LB as a VM that needs to be deleted; or
when the determined quantity of VMs is greater than 1, selecting, by the service device, one VM from the VM registered on the LB, finding, according to configuration information of the selected VM, a VM associated with the selected VM, and using, by the service device, both the selected VM and the VM associated with the selected VM as VMs that need to be deleted.

6. An apparatus, comprising:
a first obtaining unit, configured to: when it is determined that a VM scaling operation needs to be performed on a quantity of VMs used for serving an application, obtain an application type of the application, wherein the VM scaling operation comprises performing scaling-out or scaling-in on VMs serving the application;
a determining unit, configured to determine, according to a correspondence between a minimum constituent unit of the application and the application type that is obtained by the first obtaining unit, a quantity of VMs for the VM scaling operation, wherein the minimum constituent unit is a minimum quantity of VMs required for serving the application; and
an execution unit, configured to perform the VM scaling operation according to the quantity of VMs that is determined by the determining unit.

7. The apparatus according to claim 6, wherein the apparatus further comprises:
a second obtaining unit, configured to obtain a using status of a VM serving the application; and
a judging unit, configured to determine whether the using status of the VM satisfies a VM scaling rule, wherein if the using status of the VM satisfies the VM scaling rule, it indicates that the service device needs to perform the VM scaling operation, and the VM scaling rule is preconfigured in the service device.

8. The apparatus according to claim 6 or 7, wherein when the VM scaling operation is specifically performing scaling-out on the VMs serving the application, the execution unit is specifically configured to:
control a virtualization management device to create VMs according to the determined quantity of VMs and start at least one VM in the created VMs; and
after the virtualization management device completes the creation operation and the start operation, register the at least one started VM with a load balancer LB.

9. The apparatus according to claim 6 or 7, wherein when the VM scaling operation is specifically performing scaling-in on the VMs serving the application, the execution unit is specifically configured to:
determine, according to the determined quantity of VMs and from the VMs serving the application, a VM that needs to be deleted;
deregister a registered VM with an LB, wherein the registered VM is in the VM that needs to be deleted; and
after succeeding in deregistration, control the virtualization management system to delete the VM that needs to be deleted.

10. The apparatus according to claim 9, wherein that the execution unit determines, according to the determined quantity of VMs and from the VMs serving the application, a VM that needs to be deleted specifically comprises: when the determined quantity of VMs is 1, the execution unit selects one VM directly from the VM registered on the LB as a VM that needs to be deleted; or when the determined quantity of VMs is greater than 1, the execution unit selects one VM from the VM registered on the LB, finds, according to configuration information of the selected VM, a VM associated with the selected VM, and uses both the selected VM and the VM associated with the selected VM as VMs that need to be deleted.

11. A migration comprehensive determining system, comprising the apparatus and the virtualization management system according to claims 6 to 10, wherein
the virtualization management system is configured to create, start, or delete a VM under the control of the apparatus.
